# EUROPEAN PATENT SPECIFICATION

(11) **EP 3 233 763 B1**
(45) Date of publication and mention of the grant of the patent: **26.06.2019**
(21) Application number: 14833262.0
(22) Date of filing: 19.12.2014
(51) Int. Cl.: C06D 7/00

(54) **O -CHLOROBENZYLIDENE MALONONITRILE (CS) BASED SELF-COMBUSTIBLE PYROTECHNIC COMPOSITIONS WHICH HAVE LOW IGNITION TEMPERATURES**
AUF O-CHLOROBENZYLIDEN-MALONONITRIL (CS) BASIERENDE, SELBSTVERBRENNENDE PYROTECHNISCHE ZUSAMMENSETZUNGEN MIT GERINGER ZÜNDTEMPERATUR
COMPOSITIONS PYROTECHNIQUES À BASE DE O-CHLOROBENZYLIDÈNE MALONITRILE (GAZ CS) À COMBUSTION SPONTANÉE PRÉSENTANT DES TEMPÉRATURES D'ALLUMAGE FAIBLES

(43) Date of publication of application: 25.10.2017
(73) Proprietor: Tubitak, 06100 Ankara (TR)
(72) Inventor: ELMAS KIMYONOK, Atifet Begüm, Malden, MA (US); AY, Siringül, 41470 Kocaeli (TR); ULUTÜRK, Mehmet, 41470 Kocaeli (TR); BIGEÇ, Baris, 41470 Kocaeli (TR); KORLU, Zekayi, 41470 Kocaeli (TR)
(86) International application number: PCT/IB2014/067151
(87) International publication number: WO 2016/097826

(56) References cited:
- EP-A1- 0 678 492
- WO-A1-94/14637
- US-A- 3 724 382
- US-A- 3 912 562
- US-A- 3 929 530

## Description

### Technical Field

The present invention relates to pyrotechnic self-combustible riot control compositions that have low toxicity and ignition temperatures.

### Background Art

O-chlorobenzylidene malononitrile (CS) is well-known riot control agent used by law enforcing agencies during civil disturbances and one of the most potent lachrymator skin irritants. CS was synthesized via Knoevenagel condensation of o-chlorobenzaldehyde with malononitrile in the presence of different bases as a catalyst in water (U.S. patent no. 7,732,631).

Pyrotechnic compositions are composed of an inorganic oxidizer (potassium chlorate, nitrate or perchlorate) and a combustible organic fuel (lactose or sucrose) to chemically generate heat, light or color [1,2,3]. Some additives facilitate burning and improve the processing of the composition [4,5]. Stabilizer avoids drowning of the compositions owing to melting of one of the constituents. Metal oxide or carbonates such as magnesium carbonate or magnesium hydroxide are widely used as a stabilizer and coolant. Organic dyes such as 1,4-dihydroxy anthraquinone (orange), 1-(p-tolylamino)-4-hydroxy anthraquinone (violet), 1-methylamino anthraquinone (red), and 4,4'-methylidyne-bis-3-methyl-1-phenyl-2-pyrazolin-5-one (yellow) are used in smoke compositions. Binders are widely used to prevent segregation of oxidizers and fuels in pyrotechnic formulations. Use of a binder also increases the homogeneity of a mixture and possibility of successful ignition. Polymers have been incorporated into pyrotechnic and propellant compositions as binders to improve mechanical properties, sensitivity and manufacturing output of the compositions.

There have been recent efforts to develop pyrotechnic disseminating riot control composition with various specialty binders. Polyester resin (Bryant et. al. U.S. patent no. 3,391,036) was used to obtain solid and desired shaped charges. Other polymeric binder based on aromatic sulphur containing epoxy resin was disclosed in Drake et. al. U.S. patent no. 3,712,233 which described caseless munition for the dissemination of CS without flaming. Kramer patent no. DE 3418116 C1 describes pyrotechnic composition including CS or CN as irritant and polyvinyl acetate as binder to obtain desired shaped munitions. Aliphatic sulfur-containing organic compound cured with aliphatic sulfur containing epoxy resin (Flynn et. al. U.S. patent no. 4,190,471), non-halogenated epoxy based resin cured with an organic acid or organic acid anhydride (Kott et. al. U.S. patent no. 3,704,187) and liquid epoxy based resins with an organic amine curing agent (Wernett et. al. U.S. patent no. 3,467,558) were used in riot control compositions as binders. US 3724382 discloses a tear gas producing riot control agent comprising zinc oxide, oxidizer and plasticized resin fuel.

Prior art riot control composition did not meet the need for composition which has low ignition temperature and toxicity. Many of compositions disclosed in prior art may release toxic and corrosive decomposition products (e.g. hydrogenated or aromatic halogen, hydrogen sulfide) during combustion.

### Disclosure of Invention

### Disclosure

It is an object of the present invention to provide a smoke producing pyrotechnic composition for dissemination of CS. An additional object is to provide a munition which has low ignition temperature and toxicity. Low ignition temperature minimizes creation of thermal degradation products which are potentially hazardous to human health.

Sucrose, potassium chlorate, magnesium carbonate hydroxide pentahydrate and 9,10-anthraquinone are pre-ground to a fine powder and passed through a 0.125-0.105 mm (# 120- 140 mesh) sieve. CS is synthesized via Knoevenagel condensation of o-chlorobenzaldehyde with malononitrile in the presence of 1-methyl imidazole as a catalyst in water as described in literature [9]. Purity and yield of CS obtained are >99% and melting point is 93-94 °C. Certain amount of polycarbonate (PC) is dissolved in tetrahydrofuran (THF) at 40±5 °C. The amount of THF is 1.5 fold excess of total weight of composition. After dissolution of PC, CS and other powdered ingredients were added to solution. The resultant solution was maintained at 40±5 °C at least for 3 hours during stirring and removing the solvent. The solution is removed from heat and allowed to dry. The dry mixture is added to ball mill and ground back into a fine powder for 30 minutes. Powdered mixture is compressed using tablet pressing machine at a pressure of 3175 - 3629 kg (7,000-8,000 pounds) to achieve a tablet density of 1.2-1.4 g/cm³. The ignition temperatures of the compositions were determined by differential thermal analysis (DTA). Burning rates were measured at 20±5 °C. The burning rate gives information on the speed at which the tablets burn.

The following examples are given to better illustrate the present invention without limiting it to what is specifically described.

### Disclosure of Invention

### Technical Problem

### Technical- Problem

In pyrotechnic composition, ignition temperature and burning rate are very important parameters. The burning rate determines the amount of evolved gas in a specific time period. The burning rate must not be too slow or fast to obtain effective munitions. Ignition temperature is the temperature at which strong exothermic reaction begins. If the ignition temperature is high (>300 °C), CS may decompose to toxic products like hydrogen cyanide. High temperatures cause also undesirable darkening of the produced smoke and a decrease in smoke production due to burning of components. Additionally, CS based munitions may cause undesired fires in closed areas. It is recommended that CS based pyrotechnic mixture should be burnt below 300 °C.

### Solution to Problem

### Technical- Solution

The present invention provides self-combustible CS based pyrotechnic compositions which have low toxicity and ignition temperature. PC was used as a flame retardant in riot control composition for the purpose of preventing undesired fires in enclosed area. PC was also able to bind solid components together to form hard tablets as a binder. Carbonate salts are added to the composition to prevent auto catalytic decomposition of the oxidizer and to act as a buffer. These salts also function as a coolant when the composition is combusted. In the present invention, magnesium carbonate hydroxide pentahydrate ((MgCO₃)₄·Mg(OH)₂·5H₂O) was preferred as a coolant and stabilizer. It also served as a flame suppressant.

The present invention provides pyrotechnic riot control compositions which have relatively low ignition temperatures (<300 °C) to prevent decomposition of CS and undesired fires.

### Advantageous Effects of Invention

### Advantageous Effects

In the present invention, PC was used as binder and fire retardant to obtain CS based compositions with low ignition temperature. PC is a light weight polymer and has excellent flame retardant and self-extinguishing properties. PC can be injection/blow molded and extruded. It has good stiffness, melt viscosity, impact strength, modulus, transparency, light transmission, dimensional stability and thermal stability. Polycarbonate was used in gas generant compositions as a binder for inflating a safety bag in the vehicle (Lundstrom et. al. U.S. patent no. 6,435,552). Therefore, it is widely used in the fields of optical equipment, construction, automobiles, electrical and electric devices [6,7,8] due to its moldability. In the compositions, sucrose and potassium chlorate were used as fuel and oxidizer, respectively. 9, 10-anthraquinone and magnesium carbonate hydroxide pentahydrate were used as smoke component and coolant in the formulation, respectively.

The present invention provides pyrotechnic riot control compositions which have burning rate varying from 0,017-0,041 g/s and ignite at temperatures between 210-220 °C.

### Examples

### Example 1

In one embodiment, a pyrotechnic formulation having 25% by weight oxidizer/fuel and 30 % by weight CS is prepared according to Table 1.

### Table 1: 25% oxidizer/fuel formulation with 30% CS

**[Table 1]**

| **Component Type** | **Component** | **Wt.%** |
|---|---|---|
| Riot control agent | CS | 30 |
| Binder | PC (TRIREX 3022 IR) | 7 |
| Fuel | Sucrose | 25 |
| Oxidizer | Potassium chlorate | 25 |
| Stabilizer and coolant | Magnesium carbonate hydroxide pentahydrate | 10 |
| Smoke | 9,10-Anthraquinone | 3 |

The burning rate and ignition temperature of the tablets prepared from this composition were 0,020 g/s and 210 °C, respectively. The tablet was ignited by first fire, after ignition, flame was extinguished. The composition continued to burn without flame. The total weight of the tablet was 0,87 g and the weight of the ash was 0,17 g. The smoke produced had good volume.

### Example 2

In one embodiment, a pyrotechnic formulation having 27,5 % by weight oxidizer/ fuel and 10 % by weight coolant is prepared according to Table 2.

### [ Table 2: 27.5% oxidizer/fuel formulation with 10% coolant

**[Table 2]**

| **Component Type** | **Component** | **Wt.%** |
|---|---|---|
| Riot control agent | CS | 25 |
| Binder | PC (TRIREX 3022 IR) | 7 |
| Fuel | Sucrose | 27,5 |
| Oxidizer | Potassium chlorate | 27,5 |
| Stabilizer and coolant | Magnesium carbonate hydroxide pentahydrate | 10 |
| Smoke | 9,10-Anthraquinone | 3 |

The burning rate and ignition temperature of the tablets prepared from this composition were 0,029 g/s and 217 °C, respectively. The tablet ignited as in Example 1. The total weight of the tablet was 0,83 g and the weight of the ash was 0,19 g. The smoke produced had good volume.

### Example 3

In one embodiment, a pyrotechnic formulation having 30 % by weight oxidizer/fuel and 20 % by weight CS is prepared according to Table 3.

### Table 3: 30% oxidizer/fuel formulation with 20% CS

**[Table 3]**

| **Component Type** | **Component** | **Wt.%** |
|---|---|---|
| Riot control agent | CS | 20 |
| Binder | PC (TRIREX 3022 IR) | 7 |
| Fuel | Sucrose | 30 |
| Oxidizer | Potassium chlorate | 30 |
| Stabilizer and coolant | Magnesium carbonate hydroxide pentahydrate | 10 |
| Smoke | 9,10-Anthraquinone | 3 |

The burning rate and ignition temperature of the tablets prepared from this composition were 0,035 g/s and 211 °C, respectively. The tablet ignited as in Example 1. The total weight of the tablet was 0,79 g and the weight of the ash was 0,15 g. The smoke produced had good volume.

### Example 4

In one embodiment, a pyrotechnic formulation having 27,5 % by weight oxidizer/ fuel and 8 % by weight coolant is prepared according to Table 4.

### Table 4: 27.5% oxidizer/fuel formulation with 8% coolant

**[Table 4]**

| **Component Type** | **Component** | **Wt.%** |
|---|---|---|
| Riot control agent | CS | 25 |
| Binder | PC (TRIREX 3022 IR) | 7 |
| Fuel | Sucrose | 27,5 |
| Oxidizer | Potassium chlorate | 27,5 |
| Stabilizer and coolant | Magnesium carbonate hydroxide pentahydrate | 8 |
| Smoke | 9,10-Anthraquinone | 5 |

The burning rate and ignition temperature of the tablets prepared from this composition were 0,020 g/s and 217 °C, respectively. The tablet ignited as in Example 1. The total weight of the tablet was 0,78 g and the weight of the ash was 0,14 g. The smoke produced had good volume.

### Example 5

In one embodiment, a pyrotechnic formulation having 27,5 % by weight oxidizer/ fuel component and 7 % by weight coolant is prepared according to Table 5.

### Table 5: 27.5% oxidizer/fuel formulation with 7% coolant

**[Table 5]**

| **Component Type** | **Component** | **Wt.%** |
|---|---|---|
| Riot control agent | CS | 25 |
| Binder | PC (TRIREX 3022 IR) | 10 |
| Fuel | Sucrose | 27,5 |
| Oxidizer | Potassium chlorate | 27,5 |
| Stabilizer and coolant | Magnesium carbonate hydroxide pentahydrate | 7 |
| Smoke | 9,10-Anthraquinone | 3 |

The burning rate and ignition temperature of the tablets prepared from this composition were 0,034 g/s and 214 °C, respectively. The tablet ignited as in Example 1. The total weight of the tablet was 0,80 g and the weight of the ash was 0,16 g. The smoke produced had good volume.

### Example 6

In one embodiment, a pyrotechnic formulation having 25 % by weight oxidizer/fuel and 15 % by weight coolant is prepared according to Table 6.

### Table 6: 25% oxidizer/fuel formulation with 15% coolant

**[Table 6]**

| **Component Type** | **Component** | **Wt.%** |
|---|---|---|
| Riot control agent | CS | 25 |
| Binder | PC (TRIREX 3022 IR) | 7 |
| Fuel | Sucrose | 25 |
| Oxidizer | Potassium chlorate | 25 |
| Stabilizer and coolant | Magnesium carbonate hydroxide pentahydrate | 15 |
| Smoke | 9,10-Anthraquinone | 3 |

The burning rate and ignition temperature of the tablets prepared from this composition were 0,017 g/s and 213 °C, respectively. The tablet ignited as in Example 1. The total weight of the tablet was 0,81 g and the weight of the ash was 0,17 g. The smoke produced had good volume.

### Example 7

In one embodiment, a pyrotechnic formulation having 10 % by weight binder component and 25 % by weight CS is prepared according to Table 7.

### Table 7: 10% binder formulation with 25% CS

**[Table 7]**

| **Component Type** | **Component** | **Wt.%** |
|---|---|---|
| Riot control agent | CS | 25 |
| Binder | PC (TRIREX 3022 IR) | 10 |
| Fuel | Sucrose | 25 |
| Oxidizer | Potassium chlorate | 25 |
| Stabilizer and coolant | Magnesium carbonate hydroxide pentahydrate | 12 |
| Smoke | 9,10-Anthraquinone | 3 |

The burning rate and ignition temperature of the tablets prepared from this composition are 0,024 g/s and 218 °C, respectively. The tablet ignited as in Example 1. The total weight of the tablet was 0,84 g and the weight of the ash was 0,17 g. The smoke produced had good volume.

### Example 8

In one embodiment, a pyrotechnic formulation having 29,5 % by weight oxidizer/ fuel and 25 % by weight CS is prepared according to Table 8.

### Table 8: 29,5% oxidizer/fuel formulation with 25% CS

**[Table 8]**

| **Component Type** | **Component** | **Wt.%** |
|---|---|---|
| Riot control agent | CS | 25 |
| Binder | PC (TRIREX 3022 IR) | 7 |
| Fuel | Sucrose | 29,5 |
| Oxidizer | Potassium chlorate | 29,5 |
| Stabilizer and coolant | Magnesium carbonate hydroxide pentahydrate | 6 |
| Smoke | 9,10-Anthraquinone | 3 |

The burning rate and ignition temperature of the tablets prepared from this composition are 0,041 g/s and 213 °C, respectively. The tablet ignited as in Example 1. The total weight of the tablet was 0,87 g and the weight of the ash was 0,12 g. The smoke produced had good volume.

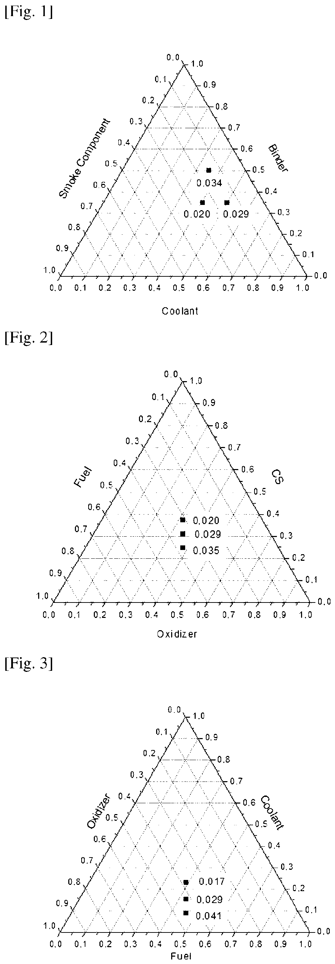

The relative amounts of CS, oxidizer and fuel were held constant in Figure 1. The burning rates ranging from 0,020-0,034 g/s are indicated on the plot. The relative amounts of smoke component, binder and coolant were held constant in Figure 2. The burning rates ranging from 0,020-0,035 g/s are indicated on the plot. The relative amounts of smoke component, binder and CS were held constant in Figure 3. The burning rates ranging from 0,017-0,041 g/s are indicated on the plot. Referring to Figure 1, 2 and 3, desired burning rate can be obtained by varying relative amounts of components in the compositions. Upon ignition, only white smoke was produced for each of the compositions in Figure 1, 2 and 3.

### Brief Description of Drawings

### Description Of Drawings

Figure 1 is a ternary plot showing variation of burning rates of the compositions with relative amounts of binder, coolant and smoke component.
Figure 2 is a ternary plot showing variation of burning rates of the compositions with amounts of oxidizer, CS and fuel.
Figure 3 is a ternary plot showing variation of burning rates of the compositions with amounts of oxidizer, coolant and fuel.

### Best Mode for Carrying out the Invention

### Best Mode

The preferred composition of riot control formulations have the following composition (Example 2):

**[Table 9]**

| **Component Type** | **Component** | **Wt.%** |
|---|---|---|
| Riot control agent | CS | 25 |
| Binder | PC (TRIREX 3022 IR) | 7 |
| Fuel | Sucrose | 27,5 |
| Oxidizer | Potassium chlorate | 27,5 |
| Stabilizer and coolant | Magnesium carbonate hydroxide pentahydrate | 10 |
| Smoke | 9,10-Anthraquinone | 3 |

The burning rate for Example 2 having 27,5 % by weight oxidizer/fuel and 10 % by weight coolant is within desired burning rate for tear gas hand grenades and cartridges.

### Industrial Applicability

Upon ignition, the heat produced by reaction of fuel and oxidizer causes CS and 9,10-anthraquinone to sublime. The compositions produce tear gas smoke which causes a temporary incapacitating. These compositions can be used as tear gas munitions in hand grenades or cartridges. They have applications in riot control and events requiring special operations by law enforcement personnel.

### References Cited

**[Table 10]**

| | | |
|---|---|---|
| US 3,391,036 | Bryant et. al. | 7/1968 |
| US 3,467,558 | Wernett et. al. | 9/1969 |
| US 3,704,187 | Kott et. al. | 10/1972 |
| US 3,712,233 | Drake et. al. | 1/1973 |
| US 4,190,471 | Flynn et. al. | 2/1980 |
| DE 3418116 C1 | Kramer | 9/1985 |
| US 6,435,552 | Lundstrom et. al. | 8/2002 |
| US 7,732,631 | Pande et. al. | 8/2010 |

### Other References

[1] B. Berger, Parameters influencing the pyrotechnic reaction, Propellants Explos. Pyrotech. 30 (2005) 27-35.
[2] M.E. Brown, Some thermal studies on pyrotechnic compositions, Therm. Anal. Calorim. 65 (2001) 323-334.
[3] X.M. Qian, Y. Wang, C.G. Feng, Investigation of thermal decomposition of KClO3/CuO/S/Mg-Al/C6Cl6 system by accelerating, Acta Phys. Chim. Sin. 17 (2001) 70-73.
[4] M. Hemmila, M. Hihkio, K. Linnainmaa, Evaluation of the acute toxicity and genotoxicity of orange, red, violet and yellow pyrotechnic smokes in vitro, Propellant Explos. Pyrot. 32 (2007) 415-422.
[5] M. Fathollahi, S. M. Pourmortazavi, S. G. Hosseini, The effect of the particle size of potassium chlorate in pyrotechnic compositions, Combust. Flame 138 (2004) 304-306.
[6] Zhang WC, Li XM, Guo XY, Yang RJ. Mechanical and thermal properties and flame retardancy of phosphoruscon-taining polyhedral oligomeric silsesquioxane (DOPO-POSS)/polycarbonate composites. Polymer Degradation and Stability 2010; 95 (12):2541.
[7] Swoboda B, Buonomo S, Leroy E, Cuesta Lopez JM. Fire retardant poly(ethylene terephthalate)/polycarbonate/tri-phenyl phosphite blends. Polymer Degradation and Stability 2008; 93 (5):910 - 917.
[8] Hoang DQ, Kim JH. Synthesis and applications of biscyclic phosphorus flame retardants. Polymer Degradation and Stability 2008; 93 (1):36-42. [9] Pande A, Ganesan K, Jain AK, Gupta PK and Malhotra RC. A novel eco-friendly process for the synthesis of 2-chlorobenzylidenemalononitrile and its analogues using water as a solvent. Organic Process Research and Development 2005;9(2): 133-136.

## Claims

1. A pyrotechnic self-combustible riot control composition comprising;
a. o-chlorobenzylidene malononitrile (CS) as riot control agent,
b. Fuel,
c. Oxidizer,
d. Polycarbonate as binder,
e. Magnesium carbonate hydroxide pentahydrate as stabilizer,
f. Dye.

2. A pyrotechnic self-combustible riot control composition according to claim 1, **characterised in that** it comprises fuel selected from the group comprising sucrose or lactose.

3. A pyrotechnic self-combustible riot control composition according to claim 1, **characterised in that** it comprises potassium chlorate as oxidizer.

4. A pyrotechnic self-combustible riot control composition according to claim 1, **characterised in that** it comprises one or more substance used as dye selected from the group comprising 1,4 dihydroxy anthraquinone, 1-(p-tolylamino)-4-hydroxy anthraquinone, 1-methylamino anthraquinone, 4,4-methylidyne-bis-3-methyl-1-phenyl-2-pyrazolin-5-one and 9,10 an-thraquinon as dye.

5. A pyrotechnic self-combustible riot control composition according to claim 1, **characterised in that** it comprises;
a. 20% to 30% wt CS,
b. 25% to 30% wt sucrose or lactose,
c. 25% to 30% wt potasium chlorate,
d. 7% to 10% wt polycarbonate,
e. 6% to 15% wt magnesium carbonate hydroxide pentahydrate, and
f. 3% to 5% wt 9,10 anthraquinone.

6. A method for making pyrotechnic self-combustible riot control composition comprising steps of;
a. Sucrose, potassium chlorate, magnesium carbonate hydroxide pentahydrate and 9,10-anthraquinone are pre-ground to a fine powder and passed through a 0.125-0.105 mm (# 120- 140 mesh) sieve,
b. PC is dissolved in tetrahydrofuran (THF) at 40±5 °C,
c. After dissolution of PC, o-chlorobenzylidene malononitrile (CS) and other powdered ingredients were added to solution,
d. The resultant solution was maintained at 40±5 °C at least for 3 hours during stirring and removing the solvent,
e. The solution is removed from heat and allowed to dry,
f. The dry mixture is added to ball mill and ground back into a fine powder for 30 minutes,
g. Powdered mixture is compressed using tablet pressing machine at a pressure of 3175 - 3629 kg (7,000-8,000 pounds) to achieve a tablet density of 1.2-1.4 g/cm³

## Patentansprüche

1. Pyrotechnische, selbstbrennbare Aufstandsbekämpfungszusammensetzung, enthält;
a. O-Chlorobenzylidene Malonsäuredinitril (CS) als Aufstandsbekämpfungsmittel,
b. Treibstoff,
c. Oxidationsmittel,
d. Polycarbonat als Bindemittel,
e. Magnesiumcarbonathydroxid-Pentahydrat als Stabilisator
f. Farbstoff

2. Pyrotechnische, selbstbrennbare Aufstandsbekämpfungszusammensetzung nach Anspruch 1, **dadurch gekennzeichnet, dass** sie einen Brennstoff umfasst, der aus der Gruppe ausgewählt ist, die Saccharose oder Lactose enthält.

3. Pyrotechnische, selbstbrennbare Aufstandsbekämpfungszusammensetzung nach Anspruch 1, **dadurch gekennzeichnet, dass** sie Kaliumchlorat als Oxidationsmittel enthält.

4. Pyrotechnische, selbstbrennbare Aufstandsbekämpfungszusammensetzung nach Anspruch 1, **dadurch gekennzeichnet, dass** sie eine oder mehrere Substanzen umfasst, die als Farbstoff verwendet werden, ausgewählt aus der Gruppe, die 1,4 Dihydroxyanthrachinon, 1-(p-Tolylamino)-4-Hydroxyanthrachinon, 1-Methylaminoanthrachinon, 4,4-Methylidin-bis-3-Methyl-1-Phenyl - 2 - Pyrazolin - 5 - one und 9,10 Anthrachinon als Farbstoff enthält.

5. Pyrotechnische, selbstbrennbare Aufstandsbekämpfungszusammensetzung nach Anspruch 1, **dadurch gekennzeichnet, dass** sie enthält:
a. 20% bis 30% an Gewicht CS
b. 25% bis 30% an Gewicht Saccharose oder Lactose
c. 25% bis 30% an Gewicht Kaliumchlorat
d. 7% bis 10% an Gewicht Polycarbonat
e. 6% bis 15% an Gewicht Magnesiumcarbonathydroxid-Pentahydrat, und
f. 3% bis 5% an Gewicht 9,10 Anthrachinon

6. Verfahren zur Herstellung einer pyrotechnischen, selbstbrennbaren Aufstandsbekämpfungszusammensetzung, enthält die folgenden Schritte:
a. Saccharose, Kaliumchlorat, Magnesiumcarbonathydroxid - Pentahydrat und 9,10 - Anthrachinon werden zu einem feinen Pulver vorgemahlen und durch ein 0,125 - 0,105 mm (# 120-140 Maschenweite) Sieb passiert,
b. PC wird in Tetrahydrofuran (THF) bei 40 ± 5 °C gelöst,
c. Nach Auflösung von PC, o-Chlorobenzylidene Malonsäuredinitril (CS) und andere pulverförmige Bestandteile werden zur Lösung gegeben,
d. Die resultierende Lösung wird mindestens 3 Stunden lang bei 40 ± 5 °C gehalten, während das Lösungsmittel gerührt und entfernt wird,
e. Die Lösung wird von der Hitze entfernt und zum Trocknen gelassen,
f. Die trockene Mischung wird in eine Kugelmühle gegeben und 30 Minuten lang zu einem feinen Pulver gemahlen,
g. Die pulverisierte Mischung wird unter Verwendung einer Tablettenpressmaschine bei einem Druck von 3.175 bis 3.629 kg (7.000 bis 8.000 Pfund) zusammengedrückt, um eine Tablettendichte von 1,2 bis 1,4 g/cm³ zu erreichen.

## Revendications

1. Composition du contrôle anti-émeute pyrotechnique auto-combustible comprenant ;
a. O-chlorobenzylidènemalononitrile (CS) comme les agents de lutte antiémeute,
b. Carburant,
c. Oxydant,
d. Polycarbonate comme liant,
e. Hydroxyde de carbonate de magnésium penta hydrate comme stabilisateur,
f. Colorant.

2. Composition du contrôle anti-émeute pyrotechnique auto-combustible selon la revendication 1, **caractérisée en ce qu'**elle comprend un carburant choisi dans le groupe comprenant le saccharose ou le lactose.

3. Composition du contrôle anti-émeute pyrotechnique auto-combustible selon la revendication 1, **caractérisé en ce qu'**il comprend du chlorate de potassium comme oxydant.

4. Composition du contrôle anti-émeute pyrotechnique auto-combustible selon la revendication 1, **caractérisée en ce qu'**elle comprend une ou plusieurs substances utilisées comme colorant choisi dans le groupe comprenant le 1,4 dihydroxyanthraquinone, la 1- (p-tolylamino) -4-hydroxy anthraquinone, 1- méthylaminoanthraquinone, 4,4-méthylidyne-bis-3-méthyl-1-phényl-2-pyrazoline-5-one et 9,10 anthraquinone comme colorant.

5. Composition du contrôle anti-émeute pyrotechnique auto-combustible selon la revendication 1, **caractérisée en ce qu'**elle comprend;
a. 20% to 30% wt CS,
b. 25% to 30% wt saccharose ou lactose,
c. 25% to 30% wt chlorure de potassium,
d. 7% to 10% wt polycarbonate,
e. 6% to 15% wt magnesium carbonate hydroxyde penta hydrate, et
f. 3% to 5% wt 9,10 anthraquinone.

6. Une méthode pour fabriquer une composition du pyrotechnique auto-combustible anti-émeute contrôle comprenant les étapes consistant à;
a. Le saccharose, le chlorate de potassium, l'hydroxyde de carbonate de magnésium pentahydraté et la 9,10-anthraquinone sont préalablement broyés en une poudre fine et passé à travers un tamis de 0,125-0,105 mm (# 120-140 mesh).
b. La PC est dissoute dans du tétrahydrofurane (THF) à 40 ± 5 ° C.
c. Après dissolution du PC, l'ο-chlorobenzylidènemalononitrile (CS) et d'autres ingrédients en poudre ont été ajoutés à la solution.
d. La solution résultante a été maintenue à 40 ± 5 ° C au moins 3 heures pendant le brassage et l'élimination du solvant,
e. La solution est retirée de la chaleur et laissée sécher,
f. Le mélange sec est ajouté au broyeur à boulets et broyé en une poudre fine pendant 30 minutes.
g. Le mélange en poudre est comprimé à l'aide d'une presse à comprimés à une pression de 3175 à 3629 kg (7 000 à 8 000 livres) pour atteindre une densité de comprimés de 1,2 à 1,4 g / cm³.
